# EUROPEAN PATENT SPECIFICATION

(11) **EP 0 550 958 B1**
(45) Date of publication and mention of the grant of the patent: **26.04.1995**
(21) Application number: 92310181.0
(22) Date of filing: 06.11.1992
(51) Int. Cl.: H01M 4/46, C22C 23/00, H01M 10/42, C23C 18/32

(54) **Magnesium-based hydrogen storage alloy electrode**
Elektrode aus Wasserstoff speichernder, auf Magnesium basierender Legierung
Electrode en alliage emmagasinant l'hydrogène à base de magnésium

(30) Priority: 08.01.1992 CN 92100030
(43) Date of publication of application: 14.07.1993
(73) Proprietor: NANKAI UNIVERSITY, Nankai Qu, Tianjin, P.R. (CN)
(72) Inventor: Zhang, Yushi, NanKai University, P.R. (CN); Song, Deying, NanKai University, P.R. (CN); Chen, Youxiao, TianJin, P.R. (CN); Wang, Genshi, NanKai University, P.R. (CN); Yuan, Huatung, NanKai University, P.R. (CN); Zhou, Zuoxiang, NanKai University, P.R. (CN); Chen, Jun, NanKai University P.R. (CN); Cao, Xuejun, NanKai University, P.R. (CN); Zang, Taoshi, NanKai University, P.R. (CN); Zhang, Daxin, NanKai University, P.R. (CN)
(74) Representative: Woods, Geoffrey Corlett

(56) References cited:
- DE-A- 4 210 096
- US-A- 4 613 362

## Description

This invention relates to a hydrogen storage alloy electrode, and in particular to a magnesium alloy based active material.

It is well known in the art that there are many kinds of the hydrogen storage alloy active material developed at present, such as the rare earth system (LaNi₅ etc), titanium system (TiNi etc), zirconium system (ZrMn₂ etc), calcium system (CaNi etc), and magnesium system (Mg₂Ni etc). Of these, the rare earth system and titanium system are studied the most and applied to the alkali batteries gradually (concentrated mainly on the sealed cylindrical batteries used for the electricity supply of portable equipment), the next most studied are the zirconium system and calcium system, and only a few reports can be found for the magnesium system.

Nevertheless, further requirements are proposed about the performance of alkali batteries for the nowadays large scale electrical equipment, especially electrically operated vehicles, wherein one of the main technical indexes is the high energy density. Because of the weights of the elements themselves, the alloys of rare earth system and titanium system are heavy. Thus the improvement of the energy density of alkali batteries assembled with the electrodes prepared from these materials is basically limited. Furthermore the cost of the alloys of rare earth system and titanium system is so expensive that the development of their application to alkali batteries used for large scale electrical equipment is also limited. The most ideal hydrogen storage alloy applied in this respect is really only the magnesium system alloy. However, hydrogen is relatively stable in the magnesium base, and can only be absorbed under high pressure and desorbed at high temperature. The magnesium-based alloy developed at present can only absorb hydrogen under 3 ∼ 10 atm. high pressure and desorb hydrogen at 300°C high temperature just as Seiler, s. et al. described in J. Less - Common Met.73, 193 (1980). The magnesium-based alloy like this can not be applied under normal conditions.

The present invention provides an active material of magnesium-based alloy which can absorb and desorb hydrogen sufficiently under normal pressure and temperature, a magnesium-based hydrogen storage alloy electrode which can absorb and desorb hydrogen efficiently under normal conditions, and an alkali battery with high energy density.

According to the present invention, a hydrogen storage alloy electrode has an active material which comprises a magnesium-based hydrogen storage alloy and a Ni, P based metallic compound. The magnesium-based alloy in powder form is coated with the Ni, P based metallic compound. The coated magnesium base alloy is activated by heat.

In accordance with the invention, a magnesium-based hydrogen storage alloy electrode includes an active material which comprises a magnesium-based alloy and a Ni, P based metallic compound. The magnesium-based alloy powder is coated with the Ni, P based metallic compound. The coated alloy powder is then treated by heat.

In one embodiment of the invention the magnesium-based alloy has the compositional formula Mg₍₂₋ₓ₎Ni_{(1-y)}A_{y}Bₓ, wherein x is between 0.1 and 1.5, y is between 0.1 and 0.5, A is at least one element selected from Sn, Sb or Bi, and B is at least one element selected from Li, Na, K and Al. Preferably, A is Sn and B is Al.

The nickel, phosphorus based metallic compound according to the invention is a Ni, P, D metallic compound in which D is an element selected from Cr, W, Co or Sn. The atomic percentage of the metallic compound is for Ni: 90 to 97%, for P:1 to 7% and for D:0 to 5%, based on total atom of the metallic compound.

It is preferred according to the invention that the metallic compound is a Ni, P metallic compound in which the atomic percentage of Ni is from 93 to 97%, and of P is from 3 to 7%.

In accordance with the invention, the magnesium-based alloy is pulverized to form alloy powder before the alloy is coated with the Ni, P based metallic compound. The size of the alloy powder is from about 250 to 600 mesh, preferably about 300 to 400 mesh. By a method of chemical plating, the coating of the Ni, P based metallic compound is formed on the surface of the alloy powder. The thickness of the coating of the metallic compound is from about 1 to 10»m according to the invention. The chemical plating is a conventional method. Before the magnesium-based alloy powder is treated by chemical plating, the alloy powder is immersed for a short period of time, for instance minutes or more, in an alkyl compound, such as dodecyl sodium sulfonate etc. The coated alloy powder is then activated by heat, usually in a vacuum furnace at a temperature from 60 to 100°C for 10 to 20 hrs.

It is believed that a new alloy phase is formed between the magnesium-based alloy and the coating of the Ni, P based metallic compound after activation treatment. It is also believed that the new alloy phase has a different compositional structure from both the magnesium-based alloy and the metallic compound, which makes it possible for the active material made according to the invention to absorb and desorb hydrogen at normal temperature and pressure.

In accordance with a feature of the invention, an alkali battery includes a hydrogen storage alloy electrode which incorporates the active material of the invention.

The magnesium-based hydrogen storage alloy electrode is prepared from the encapsulated and activated magnesium-based alloy powder according to the general technical process of electrode preparation. The alkali battery assembled with this magnesium-based alloy electrode is not only possessed of high energy density and charge - discharge capacity, but also the cost is cheap, so that it can be applied extensively to large scale electrical equipment, especially electrically operated vehicles.

### Example 1

A magnesium-based alloy with the chemical composition of Mg_{1.5} Ni_{0.7} Sn_{0.3} Al_{0.5} was prepared in a vacuum induction furnace. The alloy was crushed to particles of Φ6mm with a crusher. The particles were pulverized to powders of 300 - 400 mesh by a vibrational mill. 300g of the powder of the alloy was immersed in methylbenzene (60g) for 4 minutes. The powder was then coated with Ni, P metallic compound in a plating solution at 80°C by a chemical plating method. The plating solution used in the method contained 180g of NiCl₂, 250g of Na₂PO₂, 200g of trisodium citrate, 200g of NH₄Cl, 200ml ammonia and 5000ml pure water. The coating of Ni, P metallic compound on the surface of the alloy powder is 3 - 4 »m. The coated powder was treated in a vacuum furnace at 80°C for 10 hrs. The powder was then made up with 7% of PTFE solution to form a paste. The paste was rolled at 60°C to give an alloy powder sheet of 0.4mm thickness. An alloy electrode was formed by pressing the sheet onto a conductive nickel base with 1 ton/cm² pressure. It was assembled with nickel oxide cathode, 5M KOH + 1M LiOH electrolyte solution and nylon nonwoven separator to form a sealed AA type alkali battery. The discharge capacity and energy density of the battery are listed in Table 1.

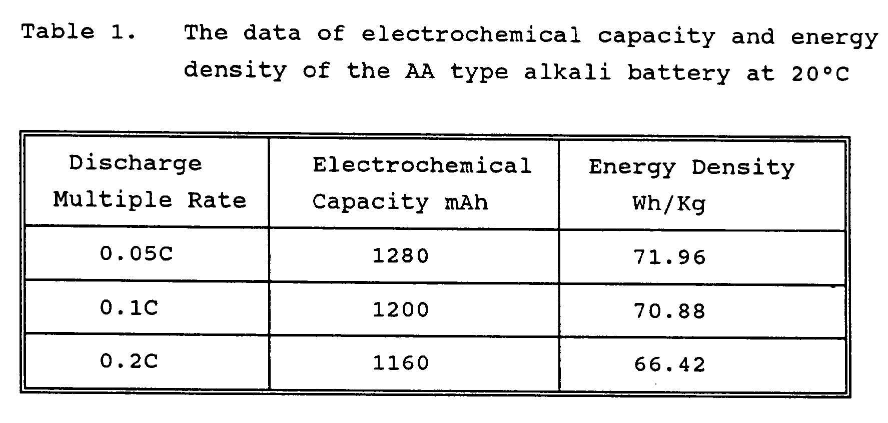

### Example 2

The magnesium-based alloy with the chemical composition of Mg_{1.8}Ni_{0.8}Sn_{0.2}Al_{0.2} was prepared in a vacuum induction furnace. The alloy was pulverized to 300 ∼ 400 mesh by a conventional vibrational mill, and then immersed in a solution containing 5% by weight of dodecyl sodium sulfonate for 5 minutes. After the immersed magnesium-based alloy powder was taken out, a coating of Ni, P metallic compound was deposited on its surface by the chemical plating method using the plating solution of Example 1. The magnesium-based alloy powder encapsulated with the Ni, P metallic compound was treated in a vacuum furnace at 80°C for 12 hrs with preserved temperature. The magnesium-based hydrogen storage alloy electrode was prepared from 1g of encapsulated and activated magnesium-based alloy powder according to the general technique. The electrochemical capacity and the energy density of the magnesium-based hydrogen storage alloy anode were examined with the nickel oxide cathode and the Hg / HgO reference electrode. The comparative data of the electrochemical capacity and the energy density of the magnesium-based alloy electrode and the alloy electrodes of rare earth system and titanium system are listed in Table 2.

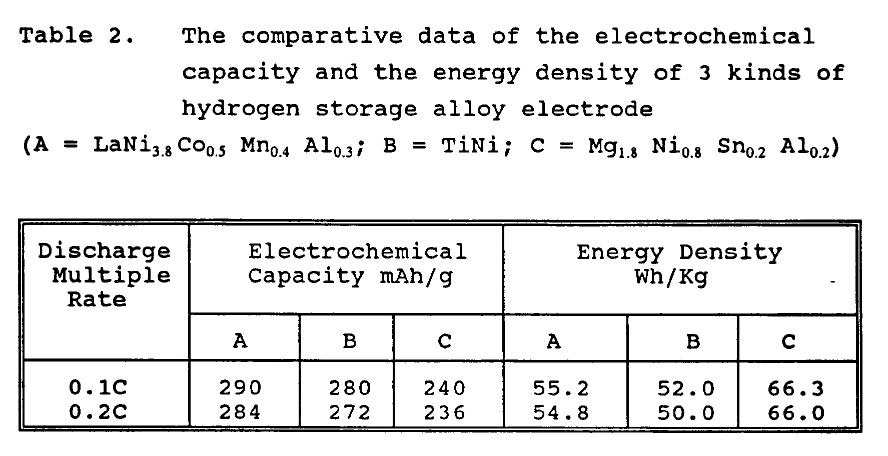

### Example 3

Powders of the pure metals, Mg, Ni, Zn, Al and Zr, all in size of 300 ∼ 400 mesh, were well mixed. The mixture was put into a stainless cylindrical container in the atmosphere of argon. The mixture was treated at 450°C ±50°C for 20 hrs. The alloy powder made had its chemical composition, Mg_{1.6}Ni_{0.8}Zn_{0.2}Al_{0.15}. The alloy anode was made by the same process as in the Example 1. A 1.2V 10AH alkali battery was assembled with the alloy sheet.

The electrochemical capacity and the energy density are shown in Table 3.

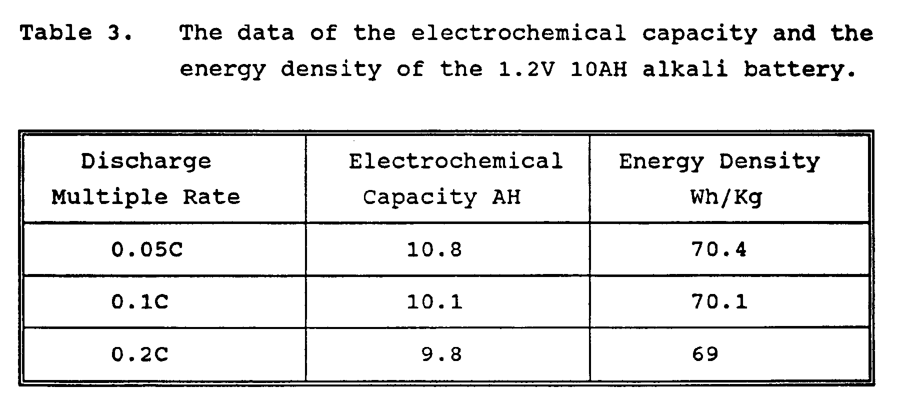

## Claims

1. A hydrogen storage alloy electrode, the active material of which comprises a magnesium-based hydrogen storage alloy in powder form coated with a Ni, P based metallic compound, and activated by heat.

2. An electrode as claimed in Claim 1, wherein the magnesium-based hydrogen storage alloy has the compositional formula Mg₍₂₋ₓ₎ Ni_{(1-y)} A_{y} Bₓ, in which x is between 0.1 and 1.5, y is between 0.1 and 0.5, A is at least one element selected from Sn, Sb and Bi and B is at least one element selected from Li, Na, K and Al.

3. An electrode as claimed in Claim 2, wherein A is Sn and B is Al.

4. An electrode as claimed in Claim 1, 2 or 3 wherein the metallic compound is a Ni, P, D metallic compound in which D is an element selected from Cr, W, Co and Sn.

5. An electrode as claimed in Claim 4, wherein the metallic compound is a Ni, P, D metallic compound in which D is an element selected from Cr, W, Co and Sn, and the atomic percentage of the Ni, P, D metallic compound is for Ni:90 to 97%, for P:1 to 7% and for D:0 to 5%.

6. An electrode as claimed in Claim 1, 2 or 3 wherein the metallic compound is a Ni, P metallic compound in which the atomic percentage of Ni is from 93 to 97% of the metallic compound, P is from 3 to 7%.

7. An electrode as claimed in any one of Claims 1 to 6, wherein the thickness of the coating is from 1 to 10»m.

## Patentansprüche

1. Elektrode aus Wasserstoff speichernder Legierung, deren aktives Material eine Wasserstoff speichernde, auf Magnesium basierende Legierung in Pulverform umfaßt, die mit einer auf Ni, P basierenden metallischen Verbindung beschichtet und mittels Hitze aktiviert ist.

2. Elektrode nach Anspruch 1, in der die Wasserstoff speichernde, auf Magnesium basierende Legierung die Zusammensetzungsformel Mg₍₂₋ₓ₎ Ni_{(1-y)} A_{y} Bₓ aufweist, in welcher x zwischen 0.1 und 1.5 liegt, y zwischen 0.1 und 0.5 liegt, A wenigstens ein aus Sn, Sb und Bi ausgewähltes Element ist und B wenigstens ein aus Li, Na, K und Al ausgewähltes Element ist.

3. Elektrode nach Anspruch 2, in der A Sn ist und B Al ist.

4. Elektrode nach Anspruch 1, 2 oder 3, in der die metallische Verbindung eine Ni, P, D-metallische Verbindung ist, in welcher D ein aus Cr, W, Co und Sn ausgewähltes Element ist.

5. Elektrode nach Anspruch 4, in der die metallische Verbindung eine Ni, P, D-metallische Verbindung ist, in welcher D ein aus Cr, W, Co und Sn ausgewähltes Element ist und der atomare Prozentgehalt der Ni, P, D-metallischen Verbindung 90 bis 97% Ni, 1 bis 7% P und 0 bis 5% D ist.

6. Elektrode nach Anspruch 1, 2 oder 3, in der die metallische Verbindung eine Ni, P-metallische Verbindung ist, in welcher der atomare Prozentgehalt an Ni 93 bis 97% und an P 3 bis 7% der metallischen Verbindung ist.

7. Elektrode nach einem beliebigen der Ansprüche 1 bis 6, in der die Dicke des Überzugs 1 bis 10 »m ist.

## Revendications

1. Une électrode en alliage emmagasinant l'hydrogène, dont la matière active comprend un alliage à base de magnésium en poudre emmagasinant l'hydrogène, recouvert d'un composé métallique à base de Ni et P, et activé par la chaleur.

2. Une électrode selon la revendication 1, dans laquelle l'alliage à base de magnésium emmagasinant l'hydrogène a la formule de composition Mg₍₂₋ₓ₎ Ni_{(1-y)} A_{y} Bₓ, dans laquelle x est compris entre 0.1 et 1.5, y est compris entre 0.1 et 0.5, A est au moins un élément choisi à partir du Sn, Sb et Bi et B est au moins un élément choisi à partir du Li, Na, K et Al.

3. Une électrode selon la revendication 2, dans laquelle A est en Sn et B est en Al.

4. Une électrode selon l'une des revendications 1 à 3, dans laquelle le composé métallique est un composé métallique en Ni, P, D dans lequel D est un élément choisi à partir du Cr, W, Co et Sn.

5. Une électrode selon la revendication 4, dans laquelle le composé métallique est un composé métallique en Ni, P, D dans lequel D est un élément choisi à partir du Cr, W, Co et Sn, et le pourcentage atomique du composé métallique en Ni, P, D est pour Ni de 90 à 97%, pour P de 1 à 7% et pour D de 0 à 5%.

6. Une électrode selon la revendication 1, 2, ou 3, dans laquelle le composé métallique est un composé métallique en Ni, P dans lequel le pourcentage atomique de Ni représente 93 à 97% du composé métallique et P 3 à 7% dudit composé.

7. Une électrode selon l'une quelconque des revendications 1 à 6, dans laquelle l'épaisseur du revêtement est comprise entre 1 et 10»m.
